# EUROPEAN PATENT APPLICATION

(11) **EP 2 913 940 A1**
(43) Date of publication of application: **02.09.2015**
(21) Application number: 15156505.8
(22) Date of filing: 25.02.2015
(51) Int. Cl.: H04B 7/185, H04B 7/204

(54) **Bonded pseudo hemispherical beam operation for spot beam environments**

(30) Priority: 28.02.2014 US 201414193361
(71) Applicant: Comtech EF Data Corp., Tempe, AZ 85281 (US)
(72) Inventor: Davis, Wallace, Scottsdale, Arizona 85255 (US); Artzi, Tiberiu, Cave Creek, Arizona 85331 (US); Beeler, Michael, Jefferson, MD 21755 (US)
(74) Representative: Curley, Donnacha John

(57) **Abstract**

A method of creating a pseudo hemispherical beam using a plurality of individual spot beams comprising receiving by a single router or packet processor, user data from a plurality of users, processing the user data by the single router or packet processor using a QoS logic such that a single output comprising a plurality of queues of data results, each queue of data comprising data designated for transmission only to one or more predetermined remote receivers, modulating the plurality of queues of data received using a multiple-carrier modulator such that a single output comprising a plurality of individual spot beams results, wherein each individual spot beam has a unique center frequency and carrier signal configuration, and transmitting the plurality of individual spot beams to a repeating relay configured to transmit each individual spot beam to the one or more predetermined remote receivers.

## Description

### BACKGROUND

### Technical Field

Aspects of this document relate generally to telecommunication systems and techniques for transmitting data across a telecommunication channel.

### Background Art

Providing satellite coverage to a large geographic area is not a new concept for the satellite industry. However, the new High-Throughput Satellites (HTS) no longer use a single beam to cover the same geographic area, but instead use a collection of beams to cover a similar geographic area. In the prior art, there does not exist a way to relate the individual spot beams to allow the users distributed throughout the beams to be "related" in a way that reduces usage of overall usage of the bandwidth.

Traditionally, providing support for a hemispherical beam has been accomplished using a single transmission chain that includes a router or packet processor and a modulating device. To accomplish similar transmission using spot beams has traditionally required replication of a transmission chain as used for a hemispherical beam in each of the spot-beams, which results in duplication of data or the need to separate data in a manner that requires each chain to operate nearly independent of each other, thereby leading to an excessive use of resources and a lack of efficiency among the overall network.

### SUMMARY

Implementations of a method of creating a pseudo hemispherical beam using a plurality of individual spot beams may comprise receiving, by a single router or packet processor, user data from a plurality of users, processing the user data by the single router or packet processor using a QoS logic such that a single output comprising a plurality of queues of data results, each queue of data comprising data designated for transmission only to one or more predetermined remote receivers, modulating the plurality of queues of data received from the single router or packet processor using a multiple-carrier modulator such that a single output comprising a plurality of individual spot beams results, each individual spot beam comprising at least one carrier signal, and having a unique center frequency and carrier signal configuration and transmitting the plurality of individual spot beams to a repeating relay configured to transmit each individual spot beam to the one or more predetermined remote receivers designated to receive the one or more queues of data.

Particular aspects may comprise one or more of the following features. The plurality of individual spot beams may comprise less duplicate data among the plurality of individual spot beams than that of an equivalent hemispherical beam configured to transmit the user data to the one or more predetermined remote receivers. The method may further comprise bridging the user data by the single router or packet processor. The method may further comprise routing the user data by the single router or packet processor. The method may further comprise spoofing or optimizing the user data by the single router or packet processor. The method may further comprise rate shaping the user data by the single router or packet processor. The queues of data among the plurality of queues of data may be dedicated transmission queues. Information may be designated for each queue based on feedback received from a secondary network. The carrier configuration of each spot beam may be a static configuration. The carrier configuration of each spot beam may be a dynamic configuration. The dynamic configuration may be configured to meet one or more network traffic requirements or to support one or more remote receivers during a beam-to-beam transition. The router or packet processor and multi-carrier modulator may be contained within a single unit. One or more of the data queues has at least one of a 1:1, 1:N, or an M:N redundant configuration. The output of the multi-carrier modulator may be at an intermediate frequency (IF) or a radio frequency (RF). One or more of the individual spot beam center frequencies and carrier signal configurations may be determined by an external control process.

Implementations of a system for creating a pseudo hemispherical beam using a plurality of individual spot beams may comprise a single router or packet processor configured to receive user data from a plurality of users and process the user data using a QoS logic such that a single output comprising a plurality of queues of data results, each queue of data comprising data designated for transmission only to one or more predetermined remote receivers. The system may further comprise a multiple-carrier modulator configured to modulate the plurality of queues of data received from the single router or packet processor such that a single output comprising a plurality of individual spot beams results, wherein each individual spot beam among the plurality of individual spot beams is comprised of at least one carrier signal and has a unique center frequency and carrier signal configuration, and a transmitter configured to transmit the plurality of individual spot beams to a repeating relay configured to transmit each individual spot beam to the one or more predetermined remote receivers designated to receive the one or more queues of data.

Particular aspects may comprise one or more of the following features. The plurality of individual spot beams may comprise less duplicate data among the plurality of individual spot beams than that of an equivalent hemispherical beam configured to transmit the user data to the one or more predetermined remote receivers. The single router or packet processor may be further configured to bridge the user data. The single router or packet processor may be further configured to route the user data. The single router or packet processor may be further configured to spoof or optimize. The single router or packet processor may be further configured to rate shape the user data. The queues of data among the plurality of queues of data may be dedicated transmission queues. Information may be designated for each queue based on feedback received from a secondary network. The carrier configuration of each spot beam may be a static configuration. The carrier configuration of each spot beam may be a dynamic configuration. The dynamic configuration may be configured to meet one or more network traffic requirements or to support one or more remote receivers during a beam-to-beam transition. The router or packet processor and multi-carrier modulator may be contained within a single unit. One or more of the data queues may have at least one of a 1:1, 1:N, or an M:N redundant configuration. The output of the multi-carrier modulator may be at an intermediate frequency (IF) or a radio frequency (RF). One or more of the individual spot beam center frequencies and carrier signal configurations may be determined by an external control process.

Aspects and applications of the disclosure presented here are described below in the drawings and detailed description. Unless specifically noted, it is intended that the words and phrases in the specification and the claims be given their plain, ordinary, and accustomed meaning to those of ordinary skill in the applicable arts. The inventors are fully aware that they can be their own lexicographers if desired. The inventors expressly elect, as their own lexicographers, to use only the plain and ordinary meaning of terms in the specification and claims unless they clearly state otherwise and then further, expressly set forth the "special" definition of that term and explain how it differs from the plain and ordinary meaning. Absent such clear statements of intent to apply a "special" definition, it is the inventors' intent and desire that the simple, plain and ordinary meaning to the terms be applied to the interpretation of the specification and claims.

The inventors are also aware of the normal precepts of English grammar. Thus, if a noun, term, or phrase is intended to be further characterized, specified, or narrowed in some way, then such noun, term, or phrase will expressly include additional adjectives, descriptive terms, or other modifiers in accordance with the normal precepts of English grammar. Absent the use of such adjectives, descriptive terms, or modifiers, it is the intent that such nouns, terms, or phrases be given their plain, and ordinary English meaning to those skilled in the applicable arts as set forth above.

Further, the inventors are fully informed of the standards and application of the special provisions of 35 U.S.C. § 112(f). Thus, the use of the words "function," "means" or "step" in the Description , Drawings, or Claims is not intended to somehow indicate a desire to invoke the special provisions of 35 U.S.C. § 112(f), to define the invention. To the contrary, if the provisions of 35 U.S.C. § 112(f) are sought to be invoked to define the claimed disclosure, the claims will specifically and expressly state the exact phrases "means for" or "step for, and will also recite the word "function" (i.e., will state "means for performing the function of [insert function]"), without also reciting in such phrases any structure, material or act in support of the function. Thus, even when the claims recite a "means for performing the function of ... " or "step for performing the function of ...," if the claims also recite any structure, material or acts in support of that means or step, or that perform the recited function, then it is the clear intention of the inventors not to invoke the provisions of 35 U.S.C. § 112(f). Moreover, even if the provisions of 35 U.S.C. § 112(f) are invoked to define the claimed disclosure, it is intended that the disclosure not be limited only to the specific structure, material or acts that are described in the preferred embodiments, but in addition, include any and all structures, materials or acts that perform the claimed function as described in alternative embodiments or forms of the invention, or that are well known present or later-developed, equivalent structures, material or acts for performing the claimed function.

The foregoing and other aspects, features, and advantages will be apparent to those artisans of ordinary skill in the art from the DESCRIPTION and DRAWINGS, and from the CLAIMS.
The application should be also taken to extend to and include the following numbered statements:
1. A method of creating a pseudo hemispherical beam using a plurality of individual spot beams comprising:
   receiving, by a single router or packet processor, user data from a plurality of users;
   processing the user data by the single router or packet processor using a QoS logic such that a single output comprising a plurality of queues of data results, each queue of data comprising data designated for transmission only to one or more predetermined remote receivers;
   modulating the plurality of queues of data received from the single router or packet processor using a multiple-carrier modulator such that a single output comprising a plurality of individual spot beams results, each individual spot beam comprising at least one carrier signal, and having a unique center frequency and carrier signal configuration; and
   transmitting the plurality of individual spot beams to a repeating relay configured to transmit each individual spot beam to the one or more predetermined remote receivers designated to receive the one or more queues of data.
2. The method of statement 1, wherein the plurality of individual spot beams comprise less duplicate data among the plurality of individual spot beams than that of an equivalent hemispherical beam configured to transmit the user data to the one or more predetermined remote receivers.
3. The method of statement 1, further comprising bridging the user data by the single router or packet processor.
4. The method of statement 1, further comprising routing the user data by the single router or packet processor.
5. The method of statement 1, further comprising spoofing or optimizing the user data by the single router or packet processor.
6. The method of statement 1, further comprising rate shaping the user data by the single router or packet processor.
7. The method of statement 1, wherein the queues of data among the plurality of queues of data are dedicated transmission queues.
8. The method of statement 1, wherein information is designated for each queue based on feedback received from a secondary network.
9. The method of statement 1, wherein the carrier configuration of each spot beam is a static configuration.
10. The method of statement 1, wherein the carrier configuration of each spot beam is a dynamic configuration.
11. The method of statement 10, wherein the dynamic configuration is configured to meet one or more network traffic requirements or to support one or more remote receivers during a beam-to-beam transition.
12. The method of statement 1, wherein the router or packet processor and multi-carrier modulator are contained within a single unit.
13. The method of statement 1, wherein one or more of the data queues has at least one of a 1:1, 1:N, or an M:N redundant configuration.
14. The method of statement 1, wherein the output of the multi-carrier modulator is at an intermediate frequency (IF) or a radio frequency (RF).
15. The method of statement 1, wherein one or more of the individual spot beam center frequencies and carrier signal configurations is determined by an external control process.
16. A system for creating a pseudo hemispherical beam using a plurality of individual spot beams comprising:
   a single router or packet processor configured to:
      receive user data from a plurality of users; and
      process the user data using a QoS logic such that a single output comprising a plurality of queues of data results, each queue of data comprising data designated for transmission only to one or more predetermined remote receivers;
   a multiple-carrier modulator configured to modulate the plurality of queues of data received from the single router or packet processor such that a single output comprising a plurality of individual spot beams results, wherein each individual spot beam among the plurality of individual spot beams is comprised of at least one carrier signal and has a unique center frequency and carrier signal configuration; and
   a transmitter configured to transmit the plurality of individual spot beams to a repeating relay configured to transmit each individual spot beam to the one or more predetermined remote receivers designated to receive the one or more queues of data.
17. The system of statement 16, wherein the plurality of individual spot beams comprise less duplicate data among the plurality of individual spot beams than that of an equivalent hemispherical beam configured to transmit the user data to the one or more predetermined remote receivers.
18. The system of statement 16, wherein the single router or packet processor is further configured to bridge the user data.
19. The system of statement 16, wherein the single router or packet processor is further configured to route the user data.
20. The system of statement 16, wherein the single router or packet processor is further configured to spoof or optimize.
21. The system of statement 16, wherein the single router or packet processor is further configured to rate shape the user data.
22. The system of statement 16, wherein the queues of data among the plurality of queues of data are dedicated transmission queues.
23. The system of statement 16, wherein information is designated for each queue based on feedback received from a secondary network.
24. The system of statement 16, wherein the carrier configuration of each spot beam is a static configuration.
25. The system of statement 16, wherein the carrier configuration of each spot beam is a dynamic configuration.
26. The method of statement 25, wherein the dynamic configuration is configured to meet one or more network traffic requirements or to support one or more remote receivers during a beam-to-beam transition.
27. The system of statement 16, wherein the router or packet processor and multi-carrier modulator are contained within a single unit.
28. The system of statement 16, wherein one or more of the data queues has at least one of a 1:1, 1:N, or an M:N redundant configuration.
29. The system of statement 16, wherein the output of the multi-carrier modulator is at an intermediate frequency (IF) or a radio frequency (RF).
30. The system of statement 16, wherein one or more of the individual spot beam center frequencies and carrier signal configurations is determined by an external control process.

### BRIEF DESCRIPTION OF THE DRAWINGS

Implementations will hereinafter be described in conjunction with the appended drawings, where like designations denote like elements, and:
FIG. 1 demonstrates a traditional global beam of the prior art.
FIG. 2 demonstrates packet processing of a global hemispherical beam as found in the prior art.
FIG. 3 demonstrates a traditional hemispherical beam of the prior art.
FIG. 4 demonstrates packet processing of a traditional hemispherical beam as found in the prior art.
FIG. 5 demonstrates traditional support of multiple spot-beams as found in the prior art.
FIG. 6 demonstrates packet processing of traditional support of multiple spot-beams as found in the prior art.
FIG. 7 demonstrates an implementation of a method of creating a bonded pseudo hemispherical beam using spot-beams.
FIG. 8 demonstrates an implementation of a method of packet processing of a bonded pseudo hemispherical beam using spot-beams.
FIG. 9 demonstrates an implementation of a method of creating a bonded pseudo hemispherical beam using spot beams in which user input data is received and processed in accordance with the disclosed method.
FIG. 10 demonstrates an implementation of the disclosed method wherein the router or packet processor and multi-carrier modulator receives input control information to reconfigure the network.

### DESCRIPTION

This disclosure, its aspects and implementations, are not limited to the specific components, frequency examples, or methods disclosed herein. Many additional components and assembly procedures known in the art consistent with the creation of a bonded pseudo hemispherical-beam operation for spot-beam environments are in use with particular implementations from this disclosure. Accordingly, for example, although particular implementations are disclosed, such implementations and implementing components may comprise any components, models, versions, quantities, and/or the like as is known in the art for such systems and implementing components, consistent with the intended operation.

This disclosure relates to implementations of a method of creating bonded pseudo hemispherical beam operation for spot-beam operation. The prior art for providing support for a hemispherical beam accomplishes this by using a single transmission chain. A transmission chain involves a router or packet processor and a modulating device. To accomplish a similar function would require replication of the transmission chain in each of the spot-beams; however, this introduces drawbacks such as data being duplicated or having to be separated in a manner that requires each chain to operate nearly independent of each other. Particular implementations described herein allow a single router or packet processor and modulator to support all beams simultaneously and coherently. Implementations provide a single transmission (creation) and processing point, but use the separate beams as a coherent transmission point to allow intelligent routing of the data to be transmitted to the appropriate beam for delivery and flow management (metering) of the traffic flowing out of each beam to ensure rate-based rules are adhered to for each of the transmission beams. Some implementations of the method can be employed for an electromagnetic emitting device, such as optical or Radio Frequency (RF) transmission equipment for point-to-point, point-to-multipoint and/or multipoint-to-multipoint operation.

This disclosure further relates to, but is not limited to, providing a bonded pseudo hemispherical beam operation for spot-beam environments over a repeating relay. Satellite coverage comes in a limited number of arrangements as follows: 1) global, in which the footprint (coverage area) of the satellite may cover a large portion of the earth (anywhere from 1/3 of the surface of the earth, continent, country or large geographic region); 2) hemispherical, such as an upper or lower latitude over 1/3 of the latitude of the surface of the earth, a portion of a continent, country or medium sized geographic region; and 3) spot beam, such as a small geographic region on the order of a 500 to 700 km. The spot beam is used for providing increased energy density for small satellite footprints where energy may be concentrated. The net result is improved satellite coverage. Spot beams are typically used for higher frequency operation such as Ku-Band (greater than 10 GHz) and above.

The ability for one to utilize a spot beam architecture to create contiguous beam coverage, thus providing similar results of a hemispherical beam may be accomplished, by bonding spot beams into a collection of coherent beams to represent the same coverage of a hemispherical beam. Particular implementations of this disclosure describe a method that results in coherent coverage and operation within the collection of spot-beams with the added advantage of the increased power density of a spot beam. The implementations described provide the ability for someone skilled in the art, e.g., a satellite operator or equipment manufacturer to use implementations described to produce a hemispherical-beam from a collection of spot-beams, resulting in increased performance and coverage over existing designs.

It is intended that particular implementations described herein are and may use, but are not limited to, field-programmable gate arrays (FPGA), digital signal processors, Application Specific Integrated Circuits (ASIC), or microprocessors.

Particular implementations described herein may be accomplished by a single packet or routing processing device where the number of receivers (listeners), which may be remotely located, are known either a priori or as a result of a return channel (remote to the transmission source) instructing the transmission source where each remote receiver (listener) is located in each of the spot beams. An aspect of novelty of the disclosed method relates to providing an intelligent decision as to where a remote receiver (listener) is located and utilizing a set of routing and rate-based decisions to the data that is to be delivered to the remote receiver (listener) and then delivering this data to the appropriate spot-beam to be modulated and then transmitted to the remote receiver (listener). One aspect of novelty disclosed is that implementations allow separate spot beams that are standalone and separated in frequency and polarization between the beams to appear to be a "patchwork" of beams that creates a contiguous coverage area as a remote receiver (listener) moves from one spot beam to another spot beam. In a particular embodiment, the remote receiver (listener) may be a mobile device such as an aircraft, ship or automobile or as known in the art, a Communications on the Move (COTM) platform. In an alternate embodiment, the remote receiver (listener) may be a device that is moved over a period of time where the device may be in one spot beam for a period of time, known as a dwell time, and then moved to a new location for a period of time. This is known in the art as Communications on the Pause (COTP). In another alternate embodiment, the remote receiver (listener) may be a device that is placed in a single beam and left to operate for an indefinite period of time. This is known in the art as a fixed terminal. All of the described modes of operation COTM, COTP, and fixed may be supported with implementations described herein.

Aspects of this disclosure relate to a method and system for the creation of bonded pseudo hemispherical-beam operation for spot beam environments.

Particular implementations of the creation of a bonded pseudo hemispherical-beam operation using spot beams are disclosed herein and may be specifically employed in satellite communications systems. However, as will be clear to those of ordinary skill in the art from this disclosure, the principles and aspects disclosed herein may readily be applied to any electromagnetic (such as for example, IF, RF and optical) communications system, such as a terrestrial broadcast network without undue experimentation.

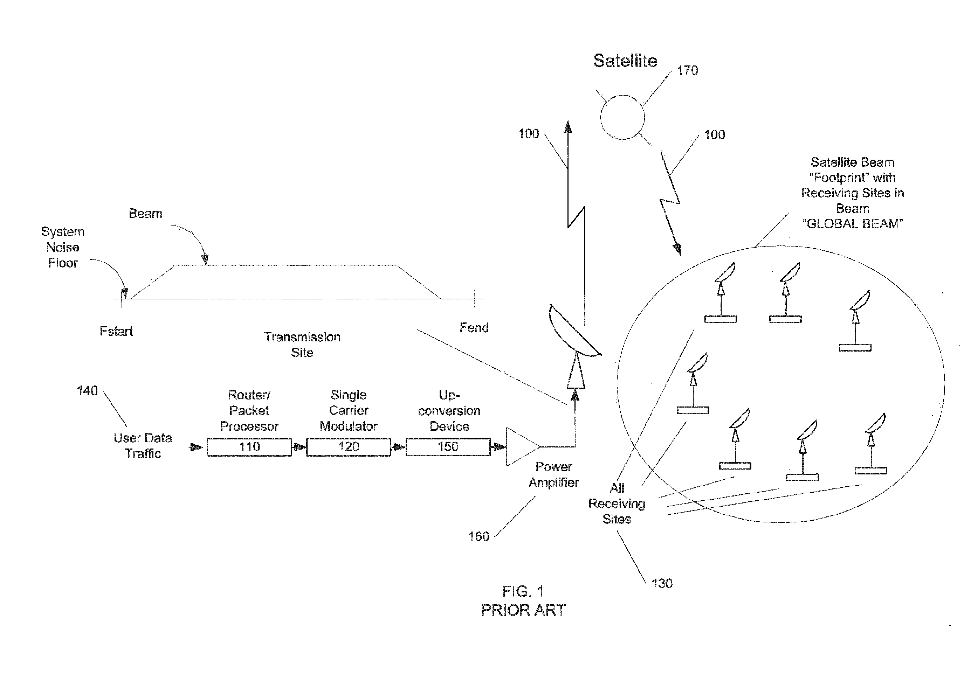

FIG. 1 demonstrates the prior art in which a single global beam 100 is fed by a router or packet processor 110 that provides the appropriate routing and rate-based control of user data to a single global beam 100 as generated by a single-carrier modulator 120. The global beam 100 provides the greatest level of geographic coverage as all receiving sites 130 receive the global beam 100, but delivers the lowest Effective Isotropic Radiated Power (ERIP) to a given geographic area. The benefit of the global beam 100 is that a single transmission source may be used to deliver common information to an entire region. These types of beams are useful for delivering common content to a large area and may include services such as broadcast television/video, broadcast radio or broadcast data services.

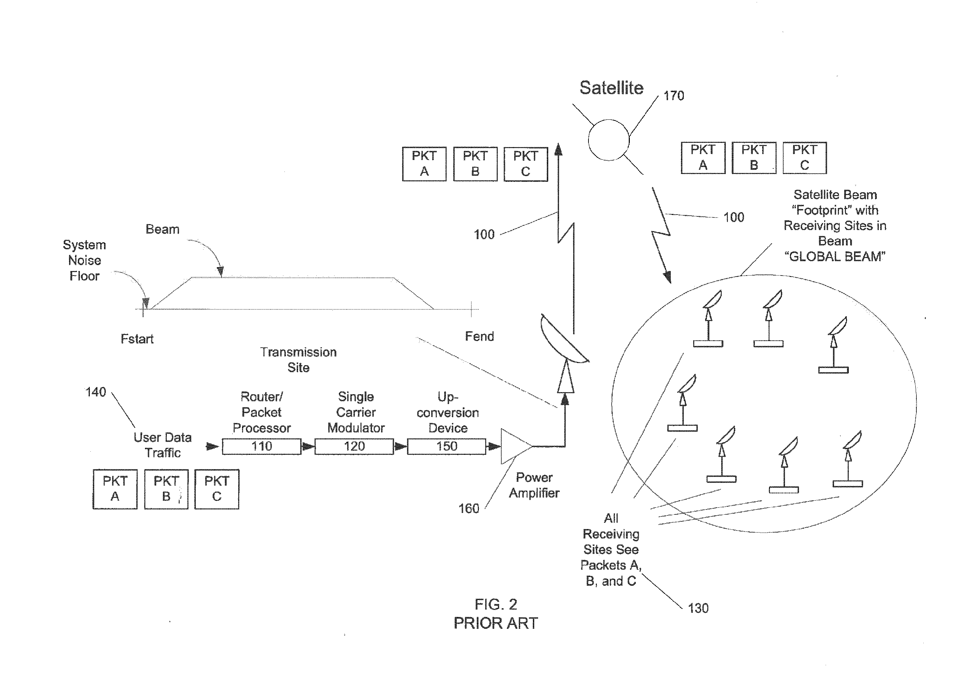

FIG. 2 demonstrates the transmission equipment associated with creation of the content or information being transmitted to a global beam. As can be seen in FIG. 2, the entire beam is fed with user data 140 to a router or packet processor 110 and the output is then fed to a single-carrier modulating device 120 where it may be up-converted using an up-converter 150 to a desired radio frequency, amplified by an amplifier 160 and transmitted to a satellite repeating relay 170.

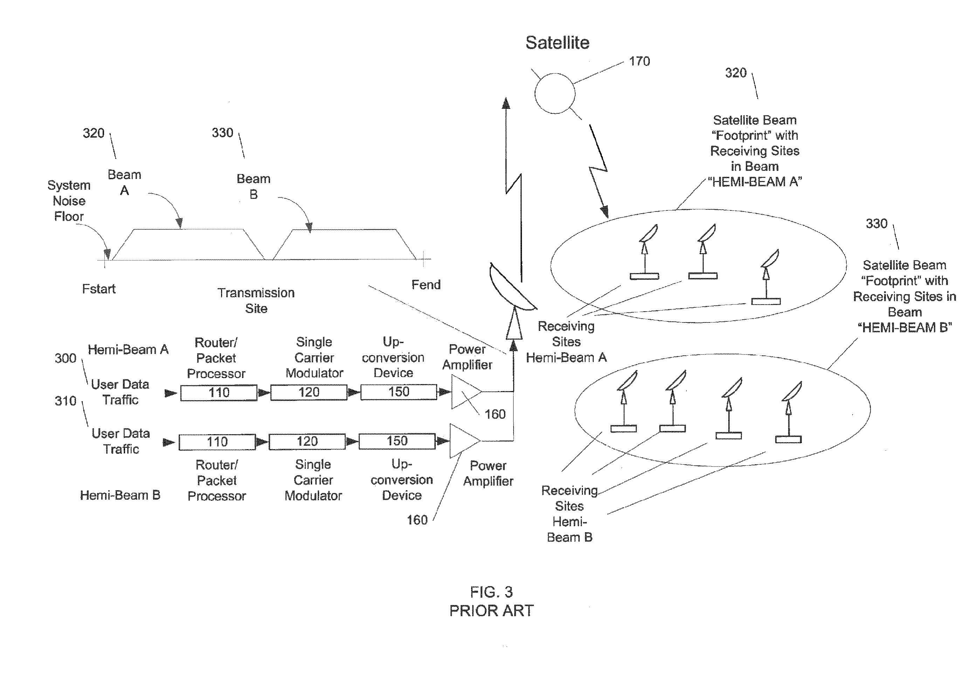

FIG. 3 demonstrates the prior art in which a "traditional hemispherical-beam" 320, 330 is fed by a router or packet processor 110 that provides the appropriate routing and rate-based control of user data 300, 310 to a single hemispherical-beam 320, 330. The hemispherical-beam 320, 330 provides the large (non-global) level of geographic coverage, but delivers a marginal Effective Isotropic Radiated Power (ERIP) to a given geographic area. A benefit of the hemispherical-beam 320, 330 is that each transmission source may be used to deliver common information to a medium-area region. These types of beams are useful for delivering common content to a medium-sized area and may include services such as broadcast television or video, broadcast radio or broadcast data services, and may possibly include some point-to-point interactive data services.

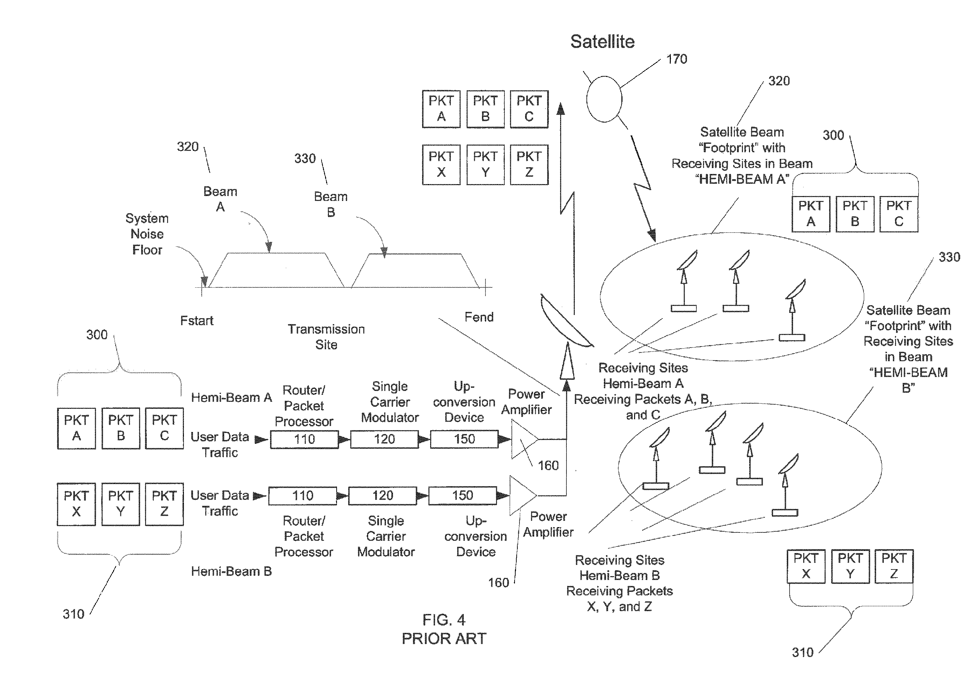

FIG. 4 demonstrates the transmission equipment associated with creation of the content/information being transmitted to a hemispherical-beam 320, 330. As can be seen in FIG. 4, the entire beam is fed with user data 300, 310 to a router or packet processor 110 and the output is then fed to a single-carrier modulating device 120 where it may be up-converted using an up-converter 150 to a desired radio frequency, amplified by an amplifier 160, and transmitted to a satellite repeating relay 170.

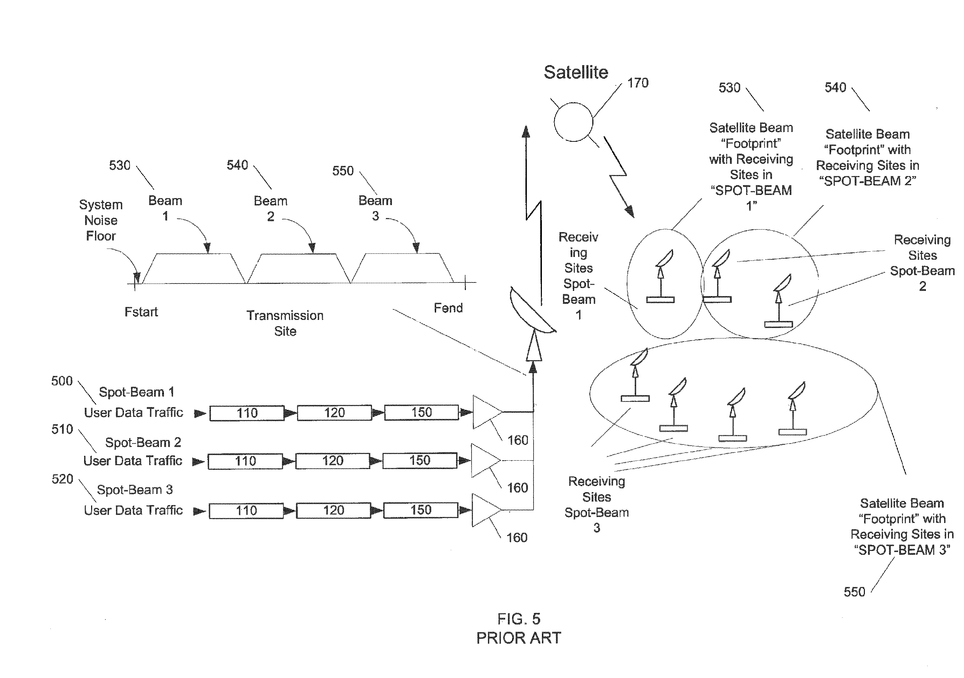

FIG. 5 demonstrates the prior art depicting a "traditional spot-beam(s)" 530, 540, 550 that is fed by N number of routers or packet processors 110 that provide the appropriate routing and rate-based control of user data to each of the spot-beams 530, 540, 550. Each spot-beam 530, 540, 550 provides a limited (for example, 500 to 700 km) geographic coverage, but delivers a high-level of Effective Isotropic Radiated Power (ERIP) to a given geographic area. The benefit of the spot-beam is that a single transmission source may be used to deliver a high concentration of EIRP to a small-area region. These types of beams are useful for delivering point-to-point (interactive) content to a small-sized area and may include services such as interactive user data services. This type of service does not typically include broadcast or common user data content such as broadcast video, radio, or broadcast data.

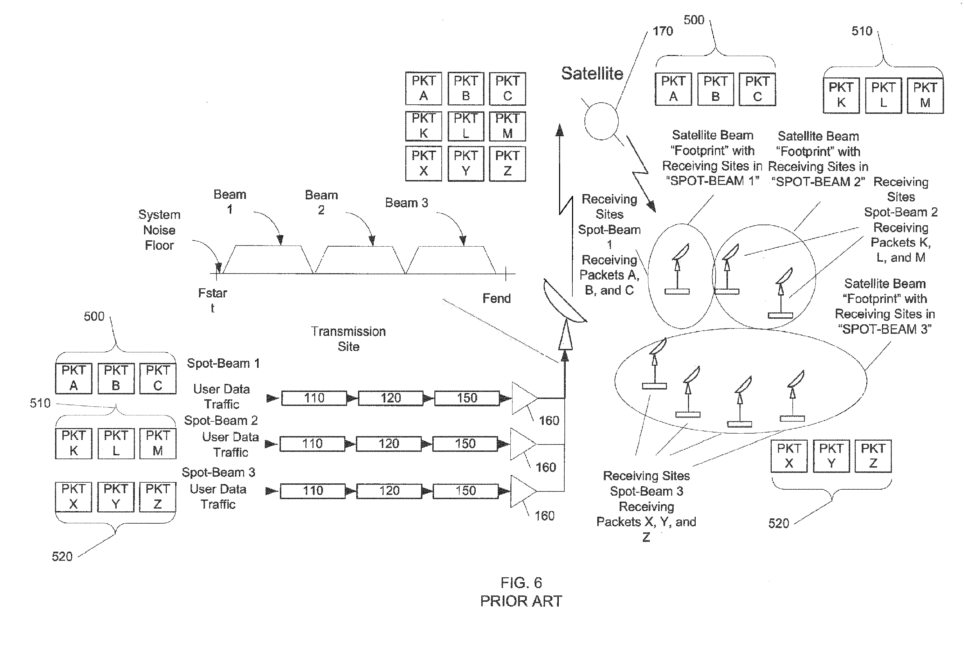

FIG. 6 demonstrates the transmission equipment associated with creation of the content or information being transmitted to a spot-beam. As can be seen in FIG. 6, the transmission equipment is replicated for each of the supported spot-beams, and is fed with user data 500, 510, 520 to a router or packet processor 110 and the output is then fed to a single-carrier modulating device 120 where it may be up-converted using an up-converter 150 to a desired radio frequency, amplified by an amplifier 160 and transmitted to a satellite repeating relay 170. One limitation of the prior art is the router or packet processor 110 is dedicated to the spot beam it is serving, and has no information about the other spot beams, e.g. other traffic flows being supported by the system. The prior art has no knowledge or provisions to prevent or adjust the flows (queues) of data based on the traffic flowing on the respective beams. Additional replication of data into a beam that is unwanted or not necessary cannot be identified and acted upon (addressed) in the prior art.

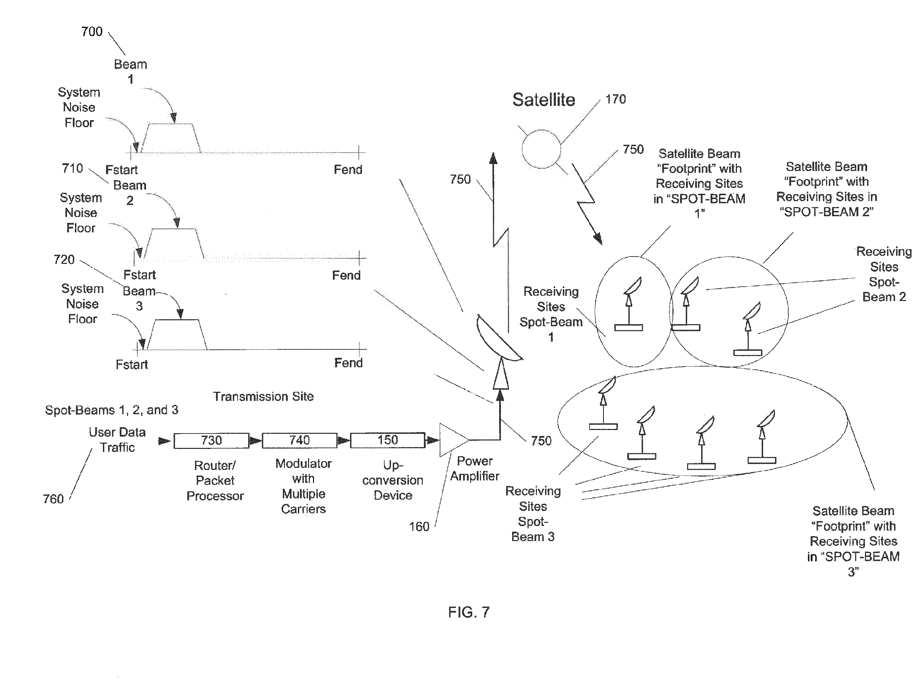

FIG. 7 demonstrates a particular implementation of the method disclosed herein in which a "traditional spot-beam(s)" 700, 710, 720 that is fed by N number of routing or packet processors and modulators has been replaced by a single router or packet processor 730 and a single multi-carrier 740 modulator. The single router or packet processor 730 and a single multi-carrier modulator 740 demonstrates that the routing decisions and rate-flow management is maintained by a single device 730 and the post-processed data is then fed to a single multi-carrier modulating device 740 where a single output 750 is comprised of a plurality of modulated carriers 700, 710, 720 that are at the appropriate center frequency, symbol rate, modulation type, forward error correction, etc. The single output of the modulating device 740 (containing a plurality of carriers - one for each spot beam), which is typically, but not limited to 50 to 180 MHz Intermediate Frequency (IF) or 950 to 2250 MHz L-Band IF, is then fed to on or an equal number of up-conversion devices 150 where the IF may be converted to Radio Frequency, such as, but not limited to L-Band, S-Band, C-Band, X-Band, Ku-Band, Ka-Band, V-Band, etc., amplified by an amplifier 160 and transmitted to a repeating relay 170. FIG. 7 shows an aspect of novelty of an implementation of the disclosed method as it relates to a single router or packet processor 730. Within this device 730, all information 760, which may be from multiple users, is received, processed, rate shaped, and prepared for modulation. The decisions as to what should and should not be forwarded as well as controlling the bandwidth allocated to a given site, group of sites, or sites within a beam may be static or dynamically controlled by the single router or packet processor 730. Additionally, the bandwidth allocated to a given beam may static or dynamic. For example, as traffic requirements are increased, the amount of bandwidth required for a given beam may be increased to meet the increased traffic requirements. Conversely, if bandwidth requirements decrease, then the bandwidth of a given beam may be dynamically decreased to match or following the traffic requirements of the network.

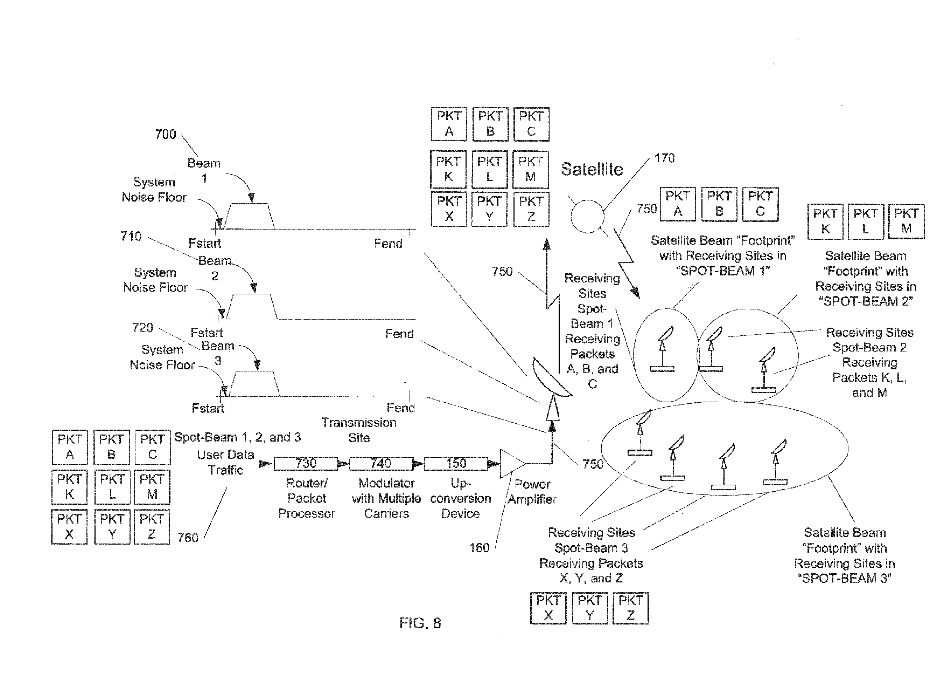

As can be seen in FIG. 8, the transmission equipment is not required to be replicated for each of the supported spot-beams, but instead contains a single data flow 760 to a routing or packet processor 730 where each data flow to each spot-beam is the output that is created and the appropriate rate-flow metrics applied such that the single output 750 contains a plurality of modulated carriers 700, 710, 720 (one for each spot beam), which is typically, but not limited to 50 to 180 MHz Intermediate Frequency (IF) or 950 to 2250 MHz L-Band IF. This is fed to one or an equal number of up-conversion devices 150 where the IF may be converted to Radio Frequency, such as, but not limited to L-Band, S-Band, C-Band, X-Band, Ku-Band, Ka-Band, V-Band, etc., amplified by an amplifier 160, and transmitted to a repeating relay 170.

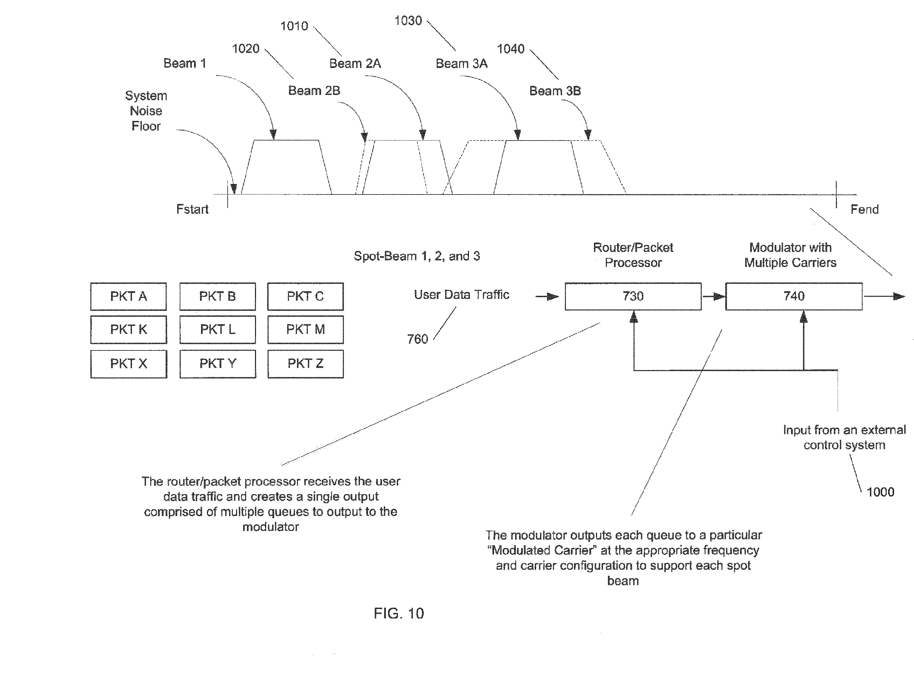

Another aspect of novelty of some implementations of the methods disclosed herein is that the bandwidth allocated to any one spot beam or user within a spot beam may be controlled by an external control method or system. The input control may be provided by user input or an autonomous system that provides feedback to the disclosed systems and methods. FIG. 10 shows how an external input 1000 may be provided to control the bandwidth and spectral allocation of the disclosed systems and methods. As shown in FIG. 10, a command to adjust the traffic on spot beam 2 has been reduced and spot beam 3 has been increased. The result is the size of Beam 2A 1010 is reduced to Beam 2B 1020 and Beam 3A 1030 is increased to become the Beam 3B 1040 (the reallocation of bandwidth may be due to a remote user moving from one beam to another beam).

FIGS. 2, 4, and 6 show the router or packet processor 110 and single-carrier modulator 120 as a device that is dedicated to each of the single beams (global, hemispherical or spot-beam), but unlike as shown in FIG. 8, at no time do these beams of the prior art make an assumption that multiple spot-beams may be bonded together and joined in a fashion that results in the patchwork of spot beams being joined in a fashion that allows a remote receiver (listener) in one beam to be able to move from one spot-beam to a second spot-beam and the single transmission source to be able to track, process, provision, and remove the service as it roams thought the beams.

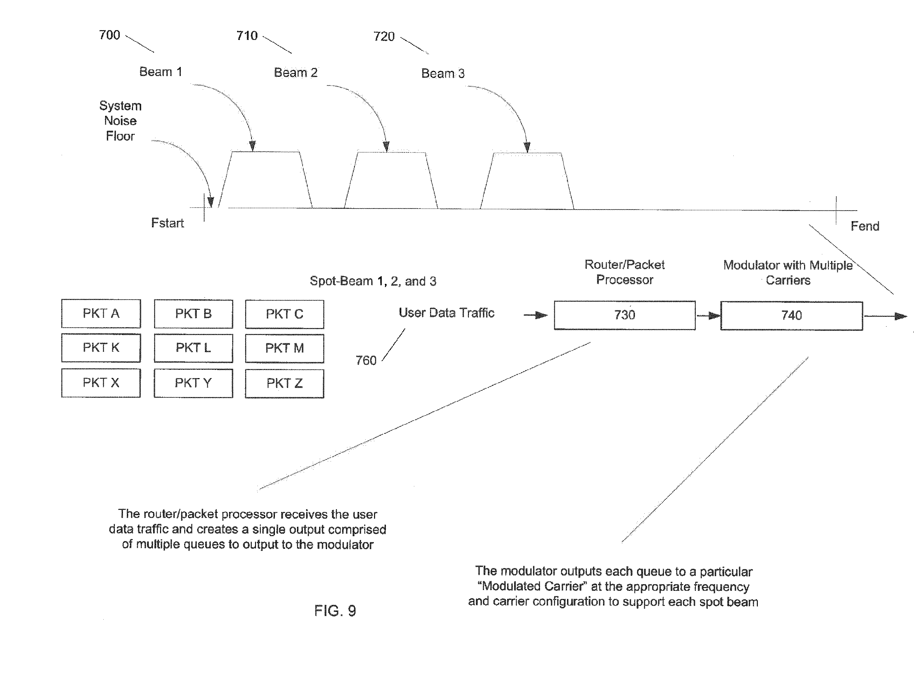

FIG. 9 shows how the router or packet processor 730 may receive a single input or a plurality of inputs of user data traffic 760 which may be received from a plurality of users, and create the appropriate queue that may be filtered, rate shaped, bridged, routed, processed, blocked, passed, processed in a manner that allows the user data traffic to be "spoofed" for performance enhancement, decimated, etc. and placed into an appropriate queue among a plurality of data queues to be passed to the modulator 740. The router or packet processor 730 processes the received user data traffic 760 and creates a single output that is comprised of a plurality of data queues that are modulated and are intended to be fed to a unique spot beam. At the modulator 740, the data queues may be modulated, forward error corrected (FEC), spectrally shaped, additionally formatted, and overhead added and then output at an appropriate and/or unique center frequency. The output may be up-converted and amplified for transmission. In an alternate embodiment, the output may be directly amplified and transmitted with no up-conversion.

As can be observed in FIG. 7 and 8, the size of the carriers is purposefully reduced due the efficiency provided by the single routing or packet processor and modulator with multiple carriers. The single point of flow allows more intelligent decisions to be made within the routing and QoS decision logic. For example, in some implementations, the single input of user data traffic is processed to comprise a set of QoS queues which are then drained on a per outbound carrier basis while maintaining the overall QoS grooming and policing present in QoS logic. Additionally, in the case of multicast, there is no need to duplicate multicast traffic into a beam with no user present or if a user has moved from one beam to another. Implementations of the described methods may take this into consideration, thus resulting in increased bandwidth usage and efficiency.

Another aspect of novelty relates to the bonding of the routing or packet processing coupled with the creation of the modulated carrier, either intermediate frequency (IF) or radio frequency (RF), allows the most efficient use of the spectrum. In some implementations, two separate devices may be used. One device may be the routing or packet processor and a second device may be a modulator with multiple carriers, where the router or packet processor prepares the information to be supplied to a downstream modulator with multiple carriers. In an alternate embodiment, the routing or packet processor and modulator with multiple carriers may be a single device in which both functions (routing or packet processing and modulation) are done in a same physical unit.

In an alternate embodiment, as shown in FIG. 8 and 9, a single router or packet processor 730 and modulator 740 with multiple carriers are shown. However, this "single thread" configuration may also be 1:1, 1:N, or M:N redundant to increase system reliability. This redundancy may be present in implementations regardless of whether the router or packet processor and modulator are contained within the same or separate unit.

The following are particular implementations of the use of the secondary carrier techniques provided as non-limiting examples.

Example 1: A satellite earth station is configured to operate on a Ku-Band spot-beam satellite that contains a plurality of spot-beams resulting in coverage that appears to be a single cohesive beam. An implementation of the described method allows the mobile device that may start on beam 1 and move to beams 5, 6, 7 and 9 in a manner in which the antenna simply points to the same satellite, but as the coverage ends on beam 1 (first beam), through the use of an implementation of the described method, the service then moves to beam 5, and then to 6, and 7 and finally to 9. The mobile device only needs to ensure the antenna remains pointed to the desired satellite, but the traffic will be switched from beam-to-beam in a manner that appears to provide service within the same beam. As the mobile terminal moves the route processing and modulating equipment, using an implementation of the described method, resources may be accounted and re-allocated resources on each beam for each beam transition.

Example 2: In particular implementations of the system described in example 1, an earth surface vessel (ship) is slowly steaming from Europe to North America and will cross three beams, numbered 1, 2 and 3. The coverage is provided by a single spot beam satellite, but requires the ship to move through three beams. The ship starts on beam 1, and using an implementation of the described method, the user data traffic remains in carrier 1 for beam one. Once the ship steams from beam 1 to beam 2, using an implementation of the described method, the traffic is then transitioned to beam 2. Once the ship steams from beam 2 to beam 3, using an implementation of the described method, the traffic is then transitioned to beam 3 and remains in beam 3 until it reaches North America. As the mobile terminal moves the route processing and modulating equipment, using an implementation of the described method, resources may be accounted and re-allocated resources on each beam for each beam transition.

Example 3: A satellite earth station is configured to operate on a Ku-Band spot-beam satellite that contains a plurality of spot-beams resulting in coverage that appears to be a single cohesive beam to support an aircraft that originates in Europe and flies to South America at 530 miles per hour (mph), and will cross 10 beams, numbered 1 - 10. The coverage is provided by a single spot beam satellite, but requires the aircraft to move through ten beams. The aircraft starts on beam 1, and using an implementation of the described method, the user data traffic remains in carrier 1 for beam one. Once the aircraft flies from beam 1 to beam 2, using an implementation of the described method, the traffic is then transitioned to beam 2. Once the aircraft flies from beam 2 to beam 3, using an implementation of the described method, the traffic is then transitioned to beam 3 and remains in beam 3, and continues to switch beam-to-beam until it reaches beam 10 and remains in beam 10 and lands in South America. As the mobile terminal moves the route processing and modulating equipment, using an implementation of the described method, resources may be accounted and re-allocated resources on each beam for each beam transition.

Example 4: In particular implementations of the system described in example 3, earth station is configured to operate on a Ka-Band spot-beam satellite that contains a plurality of spot-beams resulting in coverage that appears to be a single cohesive beam to support an aircraft that originates in Europe and flies to North America and will cross 5 beams, numbered 1 - 5. The flight then continues to South America and will cross 5 beams, numbered 6 - 10. The coverage is provided by a single spot beam satellite, but requires the aircraft to move through ten beams. The aircraft starts on beam 1, and using an implementation of the described method, the user data traffic remains in carrier 1 for beam one. Once the aircraft flies from beam 1 to beam 2, using an implementation of the described method, the traffic is then transitioned to beam 2. Once the aircraft flies from beam 2 to beam 3, using an implementation of the described method, the traffic is then transitioned to beam 3 and remains in beam 3, and continues to switch beam-to-beam until it reaches beam 5 and will remain in beam 5 while in North America. Once the aircraft leaves North America and flies toward South America, the aircraft then moves to beam 6 and continues to switch through the beams until it reaches beam 10 and remains in beam 10 and lands in South America. As the mobile terminal moves the route processing and modulating equipment, using an implementation of the described method, resources may be accounted and re-allocated resources on each beam for each beam transition.

In places where the description above refers to particular implementations of telecommunication systems and techniques for transmitting data across a telecommunication channel, it should be readily apparent that a number of modifications may be made without departing from the spirit thereof and that these implementations may be applied to other to telecommunication systems and techniques for transmitting data across a telecommunication channel.

## Claims

1. A method of creating a pseudo hemispherical beam using a plurality of individual spot beams comprising:
receiving, by a single router or packet processor, user data from a plurality of users;
processing the user data by the single router or packet processor using a QoS logic such that a single output comprising a plurality of queues of data results, each queue of data comprising data designated for transmission only to one or more predetermined remote receivers;
modulating the plurality of queues of data received from the single router or packet processor using a multiple-carrier modulator such that a single output comprising a plurality of individual spot beams results, each individual spot beam comprising at least one carrier signal, and having a unique center frequency and carrier signal configuration; and
transmitting the plurality of individual spot beams to a repeating relay configured to transmit each individual spot beam to the one or more predetermined remote receivers designated to receive the one or more queues of data.

2. The method of claim 1, wherein the plurality of individual spot beams comprise less duplicate data among the plurality of individual spot beams than that of an equivalent hemispherical beam configured to transmit the user data to the one or more predetermined remote receivers.

3. The method of claim 1 or claim 2, further comprising bridging the user data by the single router or packet processor.

4. The method of claim 1 or claim 2, further comprising routing the user data by the single router or packet processor.

5. The method of any preceding claim, further comprising spoofing or optimizing the user data by the single router or packet processor.

6. The method of any preceding claim, further comprising rate shaping the user data by the single router or packet processor.

7. The method of any preceding claim, wherein the queues of data among the plurality of queues of data are dedicated transmission queues.

8. The method of any preceding claim, wherein information is designated for each queue based on feedback received from a secondary network.

9. The method of any preceding claim, wherein the carrier configuration of each spot beam is a static configuration.

10. The method of any one of claims 1 to 8, wherein the carrier configuration of each spot beam is a dynamic configuration.

11. The method of claim 10, wherein the dynamic configuration is configured to meet one or more network traffic requirements or to support one or more remote receivers during a beam-to-beam transition.

12. The method of claim 1, wherein the router or packet processor and multi-carrier modulator are contained within a single unit.

13. The method of claim 1, wherein one or more of the data queues has at least one of a 1:1, 1:N, or an M:N redundant configuration.

14. The method of claim 1, wherein the output of the multi-carrier modulator is at an intermediate frequency (IF) or a radio frequency (RF).

15. The method of claim 1, wherein one or more of the individual spot beam center frequencies and carrier signal configurations is determined by an external control process.

16. A system for creating a pseudo hemispherical beam using a plurality of individual spot beams, the system comprising a single router or packet processor, a multiple-carrier modulator and a transmitter wherein the system is configured to perform the method of any one of claims 1 to 15.
